# EUROPÄISCHE PATENTANMELDUNG

(11) **EP 2 272 331 A2**
(43) Veröffentlichungstag der Anmeldung: **12.01.2011**
(21) Anmeldenummer: 10405129.7
(22) Anmeldetag: 06.07.2010
(51) Int. Cl.: A01K 15/02, A23K 1/18

(54) **Beschäftigungswerkzeug für Tiere**

(30) Priorität: 10.07.2009 CH 10722009; 10.07.2009 DE 202009009543 U
(71) Anmelder: Meinrad Odermatt, 8032 Zürich (CH)
(72) Erfinder: Meinrad Odermatt, 8032 Zürich (CH)
(74) Vertreter: EGLI-EUROPEAN PATENT ATTORNEYS

(57) **Zusammenfassung**

Die Erfindung betrifft ein Beschäftigungswerkzeug (W1 ... W3) für Tiere, insbesondere für Nagetiere wie Kaninchen, umfassend ein längliches Knabberholz (H1), das wenigstens eine darin angebrachte Ausnehmung aufweist, die eine für die Tiere besonders schmackhafte Futtermasse (F1) enthält. Die Erfindung ist **dadurch gekennzeichnet, dass** die Futtermasse (F1) nahrungsergänzende Vitamine und/oder nahrungsergänzende Spurenelemente enthält.

## Beschreibung

Die Erfindung betrifft das Gebiet der Aufzucht von Tieren und insbesondere die artgerechte Haltung von Nagetieren wie Kaninchen, Hamstern, Meerschweinchen, aber auch grösseren Säugetieren wie Schweinen, die unter anderem durch ein Beschäftigungswerkzeug nach dem Oberbegriff des Anspruchs 1 gewährleistet wird.

Beispielhaft möchten und müssen Kaninchen beschäftigt werden. Neben der Bewegungsfreiheit und natürlich einem oder mehreren Partnertieren sollten auch die Bedürfnisse des Knabberns und Buddelns gestillt werden.

Durch das Knabbern und Spielen mit Gegenständen müssen die stets nachwachsenden Zähne nicht regelmäßig geschnitten oder geschliffen werden. Beschäftigungswerkzeuge wie Knabberhölzer für Kaninchen werden z.B. über das Internet unter der Adresse www.tierfachmarkt.de angeboten. Zur Steigerung von deren Attraktivität sind diese mit einer besonders schmackhaften Futtermasse aus einer Körnermischung umgeben. Problematisch ist allerdings, dass die Mischung relativ schnell abgeknabbert ist und das Knabberholz damit seine Attraktivität verliert.

Unter www.futterparadies.de sind mittlerweile auch Beschäftigungswerkzeuge in Form von Knabberrollen aus Holz erhältlich, die mit einer Futtermasse aus gepresstem Heu, Kräutern oder Hirse gefüllt sind. Um deren Füllung zu erreichen, muss das Kaninchen wenigstens einen Teil des Holzes abknabbern, was einige Zeit erfordert. Der Beschäftigungsfaktor dieser Rollen ist deshalb sehr hoch, womit auch eine intensive Beanspruchung der Zähne gewährleistet ist. Dies lässt eine artgerechte Haltung der Tiere selbst unter eingeschränkten Platzverhältnissen, z.B. in einem Stall oder Gehege zu.

Ein Vorteil der vorliegenden Erfindung besteht darin, dass die artgerechte und damit nach ethischen Gesichtspunkten genügende Haltung von Nagetieren auf einfache und kostengünstige Weise weiter verbessert wird.

Dies wird durch ein Beschäftigungswerkzeug oder Beschäftigungsgegenstand bzw. - Material für Nagetiere, insbesondere Kaninchen erzielt, bei dem die Futtermasse nahrungsergänzende Vitamine wie z.B. Vitamin C, und/oder nahrungsergänzende Spurenelemente wie z.B. Zink, Eisen oder Selen enthält. Ein nahrungsergänzender Premix kann z.B. Vitamin A, D3, E, B1, K3, B2, B5, B6, B12, Niacin, Biotin, Folic Acid, Cholin Clorid, Cu, Fe, Zn, Mn, I, Co, Se, Ca, P, Na, Mg und ein Antioxidant umfassen. Da die Futtermasse in Ausnehmungen des Knabberholzes enthalten ist, wird wie schon einleitend beschrieben eine längerfristige Beschäftigung der Nagetiere mit dem Werkzeug sichergestellt. In der Folge kann damit eine dauerhafte und zuverlässige Zufuhr definierter nahrungsergänzender Stoffe erfolgen. Neben einer Grundversorgung mit Vitaminen und Mineralien können damit auch nahrungsbedingte Defizite der nicht in freiem Lebensumfeld lebenden Tiere zielgerichtet und verantwortungsgerecht ausgeglichen werden. Dies besonders in kleinsten Haltungen mit wenig Auswahl an notwendigen Ingredienzien wie Vitaminen und Spurenelementen.

Vorteilhafte Weiterbildungen des erfindungsgemässen Beschäftigungswerkzeugs sind in den Unteransprüchen angegeben. Diese betreffen insbesondere Massnahmen, welche den Beschäftigungsfaktor und/oder die Attraktivität des Werkzeugs erhöhen, womit der Nutzen der Erfindung weiter erhöht wird.

Danach ist in einer bevorzugten Ausführungsform vorgesehen, dass das Knabberholz aus einem von den Tieren bevorzugten Holzmaterial besteht, mit dem ein besonders hoher Beschäftigungsfaktor erzielt wurde. Das Gleiche trifft auf ein Knabberholz zu, das mit einer Thymiantinktur getränkt ist.

In einer weiteren bevorzugten Ausführungsform ist vorgesehen, dass die wenigstens eine Ausnehmung als Bohrung ausgeführt ist. Eine solche Bohrung lässt sich besonders einfach und schnell anbringen, womit eine beliebige gewünschte Menge und Verteilung der Futtermasse über das Holz hinweg realisiert werden kann. Dabei kann die Bohrung selbst als Durchgangs- oder Sacklochbohrung ausgeführt sein.

Der Beschäftigungsfaktor des Werkzeugs kann insbesondere dadurch erhöht werden, wenn die Bohrung in einer Längsrichtung des Knabberholzes ausgeführt ist. Dadurch muss zunächst das Holz abgeknabbert werden, bevor die Füllung frei liegt. Alternativ oder zusätzlich kann diese auch in einer Querrichtung des Knabberholzes ausgeführt sein, womit sich die Attraktivität des Werkzeugs für das Tier erhöht.

In einer nächsten bevorzugten Ausführungsform ist vorgesehen, dass die wenigstens eine Ausnehmung als Nut ausgeführt ist, denn diese Nut lässt sich einfach und schnell, zudem über eine grössere Strecke hinweg an dem Knabberholz anbringen. Zum Beispiel kann das Holz in seiner Längsrichtung eingeschnitten sein, so dass es eine U-Form annimmt. Die Füllung kann dann zwischen den Schenkeln des U angebracht werden, was zu einer über die Längsrichtung hinweg gleich grossen Attraktivität des Werkzeuges führt.

In weiteren bevorzugten Ausführungsformen kann das Knabberholz als Zylinder mit rundem oder mehreckigem Querschnitt ausgeführt sein, was das Beschäftigungswerkzeug für die Nagetiere abwechslungsreicher und damit immer wieder von Neuem interessant macht.

Das Werkzeug kann zudem eine abnehmbare Klammer umfassen, die einerseits zum zangenförmigen Umgreifen und Halten des Knabberholzes ausgebildet ist, und andererseits eine Öse zur Aufhängung des Knabberholzes in einem Stall aufweist. Damit ist das Werkzeug frei pendelnd z.B. in einem Stall aufhängbar, was seine Beschäftigungsattraktivität- und Wirkung erhöht. Zum anderen ist das Knabberholz nicht kontaminiert durch Bodenschmutz, Tierfäkalien oder Urin usw. und hat somit keine negative Auswirkungen auf das Verdauungssystem der Tiere. Das Beschäftigungsmaterial ist zudem leicht austauschbar bzw. ersetzbar, womit eine ununterbrochene Beschäftigung der Tiere möglich ist. In besonders einfacher und kostengünstiger Art und Weise ist dies durch eine nach dem Federprinzip arbeitende Klammer möglich, die aus einem rückfedernd elastischen Draht gebogen ist.

Im Folgenden werden Ausführungsbeispiele des erfindungsgemässen Beschäftigungswerkzeugs unter Bezugnahme auf die beiliegenden Figuren detailliert erläutert. Es zeigen:
- Figur 1A: die perspektivische Ansicht einer ersten Ausführungsform des erfindungsgemässen Beschäftigungswerkzeugs mit einem Knabberholz, das eine Ausnehmung aufweist, die als Längsbohrung in mit darin enthaltener Futtermasse ausgeführt ist;
- Figur 1B: die perspektivische Ansicht einer zweiten Ausführungsform des erfindungsgemässen Beschäftigungswerkzeugs mit einem Knabberholz, das drei Ausnehmungen aufweist, die als eine Längs- und zwei Querbohrungen mit darin enthaltener Futtermasse ausgeführt sind;
- Figur 1C: die perspektivische Ansicht einer dritten Ausführungsform des erfindungsgemässen Beschäftigungswerkzeugs mit einem Knabberholz, das vier Ausnehmungen aufweist, die als eine Längs- und drei Querbohrungen mit darin enthaltener Futtermasse ausgeführt sind;
- Figur 2A: die perspektivische Ansicht einer vierten Ausführungsform des erfindungsgemässen Beschäftigungswerkzeugs mit U-förmigem Knabberholz ohne Füllung mit einer Futtermasse;
- Figur 2B: die Ansicht der vierten Ausführungsform des erfindungsgemässen Beschäftigungswerkzeugs mit Futtermasse, die zwischen den Schenkeln des U-förmigen Knabberholzes eingebracht ist, und
- Figur 3: die perspektivische Ansicht einer fünften Ausführungsform des erfindungsgemässen Beschäftigungswerkzeugs mit einem Knabberholz, dass an einer abnehmbaren Klammer gehalten ist.

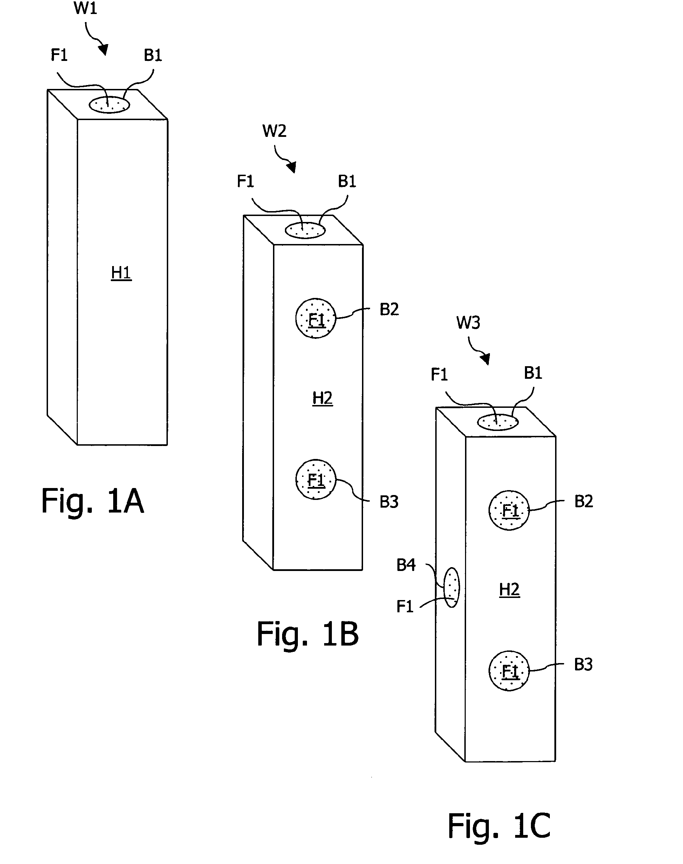

Die Figur 1A zeigt die perspektivische Ansicht einer ersten Ausführungsform des erfindungsgemässen Beschäftigungswerkzeugs W1 mit einem Knabberholz H1, das eine Ausnehmung aufweist, die als Längsbohrung B1 in mit darin enthaltener Futtermasse F1 ausgeführt ist. Das Knabberholz ist aus einem Fichtenholz oder einem anderen den Tieren wohlschmeckendem Holzmaterial hergestellt, von dem festgestellt wurde, dass es z.B. auf Nage - und Säugetiere wie Kaninchen besonders attraktiv wirkt. Natürlich kann aber auch jedes andere Material verwendet werden, das zum Knabbern anregt, wie z.B. Fichten-, Apfel-, Tannen-, oder Weidenholz usw.. Die in dem Holz eingelagerte Futtermasse besteht hier aus einer Mischung, die mit Vitaminen und Spurenelementen versehen ist. Eine solche Futtermasse übt auf ein Tier, insbesondere auf Kaninchen, eine hohe Anziehungskraft aus. Als derart ergänzte Futtermasse kann aber auch ein Heu-, Kräuter- oder Hirsengemisch dienen. Zum Erreichen der Futtermasse muss das Kaninchen nun zunächst die Holzummantelung entlang der Bohrungen B1 abnagen, was eine nicht unerhebliche Zeit in Anspruch nimmt. Der Beschäftigungsfaktor dieses Werkzeugs W1 ist deshalb sehr hoch bei anhaltender Reizwirkung. Gleichzeitig ist dafür gesorgt, dass die Zähne des Kaninchens ausreichend beansprucht werden, um ein Nachschneiden oder Nachschleifen zu vermeiden. Mit Verspeisen der Futtermasse nimmt das Kaninchen schliesslich eine vorher festgelegte, definierte Menge an Vitaminen und Spurenelementen auf, die zu seiner artgerechten körperlichen Entwicklung und Haltung erforderlich ist. Mit der Anreichung der Futtermasse um Vitamine und Spurenelemente können natürlich auch nahrungsbedingte Defizite ausgeglichen werden.

Die Figur 1B zeigt die perspektivische Ansicht einer zweiten Ausführungsform des erfindungsgemässen Beschäftigungswerkzeugs W2 mit einem Knabberholz H2, das drei Ausnehmungen aufweist, die als eine Längs- und zwei Querbohrungen B1 und B2, B3 mit darin enthaltener Futtermasse F1 ausgeführt sind. Die Art und Anreicherung Futtermasse F1 kann natürlich auch bohrungsabhängig variiert werden, z.B. mit verschieden schmackhaften Massen nach den neuesten Erkenntnissen der Wissenschaft. Dadurch kann die Aufmerksamkeit eines Kaninchens auf einen besonderen Abschnitt eines Knabberholzes gelenkt werden wie z.B. den einer potentiellen Halterung, der üblicherweise schwieriger zu erreichen ist. Das Holz H2 übt durch die leicht wahrnehmbare Futtermasse eine besondere Attraktivität auf ein Kaninchen aus, ohne den Beschäftigungsfaktor zu mindern. Denn um an die Futtermasse zu gelangen, ist immer noch ein erheblicher Teil des Holzes abzunagen, was wiederum eine erhebliche Zeit in Anspruch nimmt. Durch die vermehrten Bohrungen B1 ... B3 im Holz H2 kann die Menge der dem Kaninchen zugeführten Vitamin und Spurenelementmenge gesteigert werden, womit seine artgerechte Haltung und Ernährung positiv gewährleistet ist.

Die Figur 1C zeigt die perspektivische Ansicht einer dritten Ausführungsform des erfindungsgemässen Beschäftigungswerkzeugs W3 mit einem Knabberholz H3, das vier Ausnehmungen aufweist, die als eine Längs- und drei Querbohrungen B1 und B2 ... B4 mit darin enthaltener Futtermasse F1 ausgeführt sind. Durch die vermehrte Anbringung von Bohrungen B1 ... B4 wird die Attraktivität dieses Holzes H3 noch einmal gesteigert, ohne dass sein Beschäftigungsfaktor abnimmt. Denn um besonders gut an die Futtermasse zu gelangen, muss auch hier erst ein erheblicher Teil des Holzes abgenagt werden. Mit dem hier gezeigten Holz H3 kann die Menge an Vitaminen und Spurenelementen noch einmal gesteigert werden, die dem Kaninchen zugeführt werden und zu seiner artgerechten Haltung erforderlich sind.

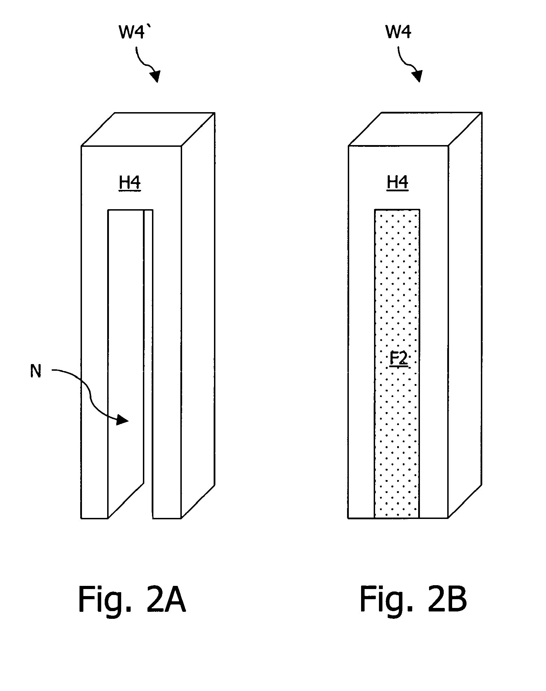

Die Figur 2A zeigt die perspektivische Ansicht einer vierten Ausführungsform des erfindungsgemässen Beschäftigungswerkzeugs W4' mit U-förmigem Knabberholz H4 ohne Füllung mit einer Futtermasse. Für diese ist eine Ausnehmung in Form einer Nut N in dem Holz H4 vorgesehen, die vollständig oder auch nur teilweise - je nach gewünschter Zufuhr von Vitaminen und Spurenelementen - aufgefüllt werden kann. Grundsätzlich kann eine Nut aber auch in Längs- und/oder Querrichtung am Umfang eines Knabberholzes angebracht sein, wobei für das Holzmaterial das schon vorstehend Gesagte gilt.

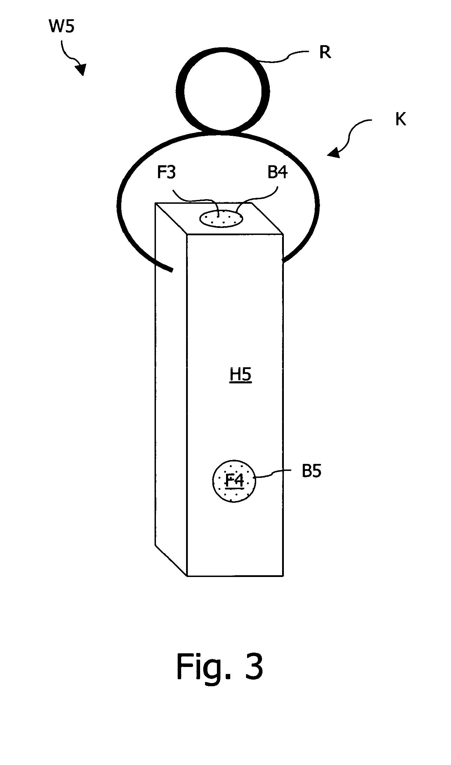

Die Figur 2B zeigt die Ansicht der vierten Ausführungsform des erfindungsgemässen Beschäftigungswerkzeugs W4 mit Futtermasse F2, die zwischen den Schenkeln des U-förmigen Knabberholzes H4 angebracht ist. Die Attraktivität eines derartigen Holzes H4 ist sehr hoch, da die Futtermasse F2 gut sichtbar und schnell zugänglich ist. Dennoch ist auch der Beschäftigungsfaktor sehr hoch, da auch hier ein erheblicher Teil des Holzes abgenagt werden muss, um besser an die Futtermasse zu kommen. Beides ist einer artgerechten Haltung der Kaninchen besonders zuträglich, da diese einerseits ausgiebig beschäftigt sind, und andererseits auch eine zuverlässige und definierte Aufnahme von Vitaminen und Spurenelementen über diesen Zeitraum gesichert ist. Grundsätzlich können auch hier unterschiedlich schmackhafte Futtermassen zwischen den Schenkeln des U angebracht werden. Insbesondere empfiehlt sich z.B. eine besonders schmackhafte Mischung im Bereich der Basis des U, um ein Benagen auch dieses Teils des Werkzeugs W4 zu gewährleisten. Dies gilt umso mehr, wenn in diesem Bereich eine Aufhängung des Knabberholzes vorgesehen ist, wie sie in Figur 3 dargestellt ist.

Die Figur 3 zeigt die perspektivische Ansicht einer fünften Ausführungsform des erfindungsgemässen Beschäftigungswerkzeugs W5 mit einem Knabberholz H5, dass an einer abnehmbaren Klammer K gehalten ist. Die Klammer K besteht aus einem gebogenen, elastisch rückfedernden Draht, der im oberen Bereich der Klammer K zu einer Öse R gebogen ist. Über diese Öse kann das Werkzeug W5 z.B. in einem Stall aufgehängt werden. Zum Entnehmen des Holzes H5 wird die Klammer K einfach auseinandergebogen und ein neues Holz zwischen die freien Arme der Klammer geklemmt. Natürlich sind auch andere Ausführungsformen einer Klammer denkbar, die z.B. über einen Griffabschnitt verfügen, der zusammengedrückt werden muss, um die Arme der Klammer schliesslich auseinander zu biegen. Der einfache und schnelle Wechsel eines Holzes lässt dabei eine ununterbrochene Beschäftigung der Tiere zu und die pendelnde Aufhängung erschwert das Abnagen des Holzes, was den Beschäftigungsfaktor erhöht. Über die Anbringung von futtermittelbefüllten Bohrungen B4 und B5 ist aber auch hier die Zufuhr von Vitaminen und Spurenelementen gesichert, um eine artgerechte Haltung der Kaninchen sicherzustellen. Dabei ist die Längsbohrung B4 mit einer besonders schmackhaften Futtermasse F3 und die weiter unter liegenden Querbohrung B5 mit einer etwas weniger schmackhaften Futtermasse F4 gefüllt. Dadurch wird auch der Abschnitt des Holzes H5 benagt, an dem die Klammer K ansetzt, was die gleichmässige Bearbeitung des Holzes H5 sicherstellt.

Grundsätzlich können alle der hier beispielhaft genannten Beschäftigungswerkzeuge W1 ... W5 auch andere Querschnitte aufweisen, wie z.B. kreisrunde, elliptische oder mehreckige Querschnitte. Die unterschiedlichen Formen machen das Beschäftigungswerkzeug für die Nagetiere abwechslungsreicher und damit immer wieder von Neuem interessant.

## Patentansprüche

1. Beschäftigungswerkzeug (W1 ... W5) für Tiere, insbesondere für Nagetiere wie Kaninchen, umfassend ein längliches Knabberholz (H1 ... H5), das wenigstens eine darin angebrachte Ausnehmung aufweist, die eine für die Tiere attraktive Futtermasse (F1 ... F4) enthält, **dadurch gekennzeichnet, dass** die Futtermasse (F1 ... F4) nahrungsergänzende Vitamine und/oder nahrungsergänzende Spurenelemente enthält.

2. Werkzeug nach Anspruch 1, bei dem das Knabberholz (H1 ... H5) aus einem von den Tieren bevorzugten Holzmaterial besteht.

3. Werkzeug nach Anspruch 1 oder 2, bei dem das Knabberholz (H1 ... H5) mit einer Thymiantinktur oder einer anderen Tinktur nach Erkenntnissen der Wissenschaft getränkt ist.

4. Werkzeug nach einem der vorstehenden Ansprüche, bei dem die wenigstens eine Ausnehmung als Bohrung (B1 ... B6) ausgeführt ist.

5. Werkzeug nach einem der vorstehenden Ansprüche, bei dem die Bohrung (B1; B4) in einer Längsrichtung des Knabberholzes (H1 ... H3; H5) ausgeführt ist.

6. Werkzeug nach einem der vorstehenden Ansprüche, bei dem die Bohrung (B2; B3; B4) in einer Querrichtung des Knabberholzes (H2; H3; H5) ausgeführt ist.

7. Werkzeug nach einem der vorstehenden Ansprüche, bei dem die wenigstens eine Ausnehmung als Nut (N) ausgeführt ist.

8. Werkzeug nach einem der vorstehenden Ansprüche, bei dem das Knabberholz (H1 ... H3; H5) als Zylinder mit rundem oder mehreckigem Querschnitt ausgeführt ist.

9. Werkzeug nach einem der vorstehenden Ansprüche, weiterhin umfassend eine abnehmbare Klammer (K), die einerseits zum zangenförmigen Umgreifen und Halten des Knabberholzes (H1 ... H3) ausgebildet ist, und andererseits eine Öse (R) zur Aufhängung des Knabberholzes (H1 ... H3) in einem Stall aufweist.

10. Werkzeug nach Anspruch 10, bei dem die Klammer aus einem rückfedernd elastischen Draht gebogen ist.
